# EUROPEAN PATENT APPLICATION

(11) **EP 3 831 194 A1**
(43) Date of publication of application: **09.06.2021**
(21) Application number: 19841932.7
(22) Date of filing: 26.07.2019
(51) Int. Cl.: A01G 7/00, A01G 9/20

(54) **ILLUMINATION DEVICE**

(30) Priority: 27.07.2018 JP 2018141474
(71) Applicant: NICHIA CORPORATION, Tokushima 774-8601 (JP)
(72) Inventor: MATSUMOTO, Mika, Tokushima 774-8601 (JP); FUJIO, Kazushige, Tokushima 774-8601 (JP); WAKUI, Sadakazu, Tokushima 774-8601 (JP); SUZUKI, Tomokazu, Tokushima 774-8601 (JP); FUJIWARA, Masato, Tokushima 774-8601 (JP); FUKUNAGA, Munetake, Tokushima 774-8601 (JP)
(74) Representative: Vossius & Partner Patentanwälte Rechtsanwälte mbB
(86) International application number: PCT/JP2019/029327
(87) International publication number: WO 2020/022465

(57) **Abstract**

[Problem to be Solved] An output of light suitable for growing plants is controlled using a white light source.

[Solution] A growing system including a greenhouse and a plurality of lighting devices disposed above a plant to be grown in the greenhouse and utilizing natural light includes a plurality of white light sources, a plurality of auxiliary light sources each of which is configured to emit red light and far-red light, and an illumination controller configured to control a degree of emission of light from the white light sources or the auxiliary light sources of the plurality of lighting devices, the illumination controller configured to start or stop controlling emission of light from the white light sources or the auxiliary light sources according to sunrise or sunset.

## Description

### Technical Field

The present invention relates to a lighting device and a growing system.

### Background Art

Methods of growing plants such as fruits, vegetables, and flowers by artificial illumination have been known. For such growth of plants, for example, artificial light is used in combination with natural light from the sun, or used singly inside a room isolated from sunlight and the outside air.

In the case in which sunlight is used, artificial light often plays an auxiliary role. For example, artificial light is auxiliarily used to compensate for the lack of hours of sunshine in a season with fewer hours of sunshine or the reduced amount of light due to cloudy or rainy weather or the like compared with that in sunny weather. Patent Literature 1 discloses a system that controls outputs of a blue light source and a far-red light source corresponding to the amount of light, such as natural light, from a light source. Light-emitting diodes (LEDs) are employed as the blue and far-red auxiliary light sources.

### Citation List

### Patent Literature

Patent Literature 1: Japanese Unexamined Patent Application Publication No. 2018-509921

### Summary of Invention

### Technical Problem

However, Patent Literature 1 does not disclose a system that controls an output of a white light source. Further, a preferable system in which a white light source is combined with a red or far-red light source or the like is not discussed.

### Solution to Problem

A lighting device according to the present invention includes a white light source; auxiliary light source which is configured to emit red light and far-red light; and an illumination controller configured to control a degree of emission of light by the white light source or the auxiliary light source, the illumination controller being configured to start or stop controlling emission of light by the white light source or the auxiliary light source according to sunrise or sunset.

A lighting device according to the present invention includes a white light source; auxiliary light source which is configured to emit red light and far-red light; and an illumination controller configured to control a degree of emission of light by the white light source or the auxiliary light sources, the illumination controller being configured to control emission of light by the white light source or the auxiliary light sources corresponding to a weather classification specified from a plurality of weather classifications..

A growing system according to the present invention including a greenhouse and a plurality of lighting devices disposed above plants to be grown in the greenhouse includes a plurality of white light sources, a plurality of auxiliary light sources each of which is configured to emit red light and far-red light, and an illumination controller configured to control a degree of emission of light by the white light source or the auxiliary light source from the plurality of lighting devices, the illumination controller being configured to start or stop controlling emission of light by the white light source or the auxiliary light source according to sunrise or sunset.

A growing system according to the present invention including a greenhouse and a plurality of lighting devices disposed above plants to be grown in the greenhouse includes a plurality of white light sources, a plurality of auxiliary light sources each of which is configured to emit red light and far-red light, and an illumination controller configured to control a degree of emission of light by the white light source or the auxiliary light source from the plurality of lighting devices, the illumination controller controlling emission of light by the white light sources or the auxiliary light sources corresponding to a weather classification specified from a plurality of weather classifications.

### Advantageous Effects of Invention

With an embodiment of the present invention, an output of light suitable for growing plants can be controlled using a white light source.

### Brief Description of Drawings

FIG. 1 is a schematic perspective view of a lighting device according to a first embodiment.
FIG. 2 is a top view of the lighting device according to the first embodiment.
FIG. 3 shows an example of the hardware configuration of the lighting device according to the first embodiment.
FIG. 4 shows another example of the hardware configuration of the lighting device according to the first embodiment.
FIG. 5 is a diagram showing a plant growing system.
FIG. 6 is a functional block diagram of a lighting device according to a second embodiment.
FIG. 7 is a functional block diagram of a lighting device according to a third embodiment.
FIG. 8 is a diagram schematically showing the positional relationship between a light amount measuring unit in the lighting device and the sun.
FIG. 9 shows the configuration of correction data stored in a correction data storing unit.
FIG. 10 is a system configuration diagram of a growing system according to a fourth embodiment.

### Description of Embodiments

Certain embodiments of the present invention will be described below referring to the accompanying drawings. Embodiments described below are intended to embody the technical concept of the present invention and do not limit the present invention. In the descriptions below, the same term or reference numeral represents the same member or a homogenous member, and its detailed description will be omitted as appropriate. Sizes or positional relationships of members illustrated in the drawings may be exaggerated in order to clarify the descriptions. Relationships between a color name and chromaticity coordinates, and between a wavelength range and a color name of monochromatic light described below are based on JIS Z8110.

Growth of a plant will be described. Reactions of a plant to light are classified as photosynthesis and photomorphogenesis. Photosynthesis is a reaction by which an organic matter is synthesized using light energy. On the other hand, photomorphogenesis refers to morphological reactions in which light is used as signals to induce germination of a seed, differentiation (such as formation of a sprout and leaves), movements (stomatal movements and chloroplast movements), phototropism, and the like. A plant contains a plurality of photoreceptors (pigments), and chlorophyll and carotenoid perform photosynthesis.

In addition to chlorophyll and carotenoid, a plant contains photoreceptors (pigments) such as phytochrome, which is a photoreceptor for red light and far-red light, and cryptochrome and phototropin, which are photoreceptors for blue light and near-ultraviolet light (UV-A). For example, phytochrome absorbs red light and far-red light to promote photomorphogenesis of the plant, such as induction of germination of a seed, cotyledon expansion, stem elongation, and phototropism.

A plant senses the light environment using the photoreceptors, so that photosynthetic reactions and photomorphogenic responses are induced. The wavelength range (300 nm or greater and 800 nm or less) that can be used by a plant for photosynthesis and photomorphogenesis substantially corresponds to the visible wavelength range (380 nm or greater and 780 nm or less). In botany, radiation in the wavelength range that can be used for photosynthetic reactions or photomorphogenic responses is referred to as physiologically active radiation. Within this range, radiation in the wavelength range of 400 nm or greater and 700 nm or less that functions as an energy source for growth of a plant is referred to as photosynthetically active radiation.

In botany, the wavelength range of about 400 nm to about 500 nm may be represented as blue light B, the wavelength range of about 500 nm to about 600 nm as green light G, the wavelength range of about 600 nm to about 700 nm as red light R, and the wavelength range of about 700 nm to about 800 nm as far-red light Fr. Also, an index of the amount of light effective for photosynthesis or photomorphogenesis tends to be expressed by not the radiant flux but the photon flux or photon flux density. The photon flux density (µmol•m⁻²•s⁻¹) is the number of photons that reach a unit area per unit time. The photon flux (µmol•s⁻¹) is the number of photons per unit time.

The spectral distribution of a light source that affects growth of a plant varies according to a ratio R/B or a ratio R/Fr of a photon flux in a specific wavelength range to a photon flux in another specific wavelength region. For example, SHIRAI Kana et al., "Effects of White LEDs with Different Spectral Distributions on Growth of Plants", Abstracts of Lectures at Meeting of Japanese Society of Agricultural, Biological and Environmental Engineers and Scientists 2016 Kanazawa, Japan, pp. 40-41 describes that differences in spectral distributions of light sources affect, for example, the plant height of romaine lettuce, and that the smaller the ratio R/Fr is, the higher romaine lettuce becomes.

### First Embodiment

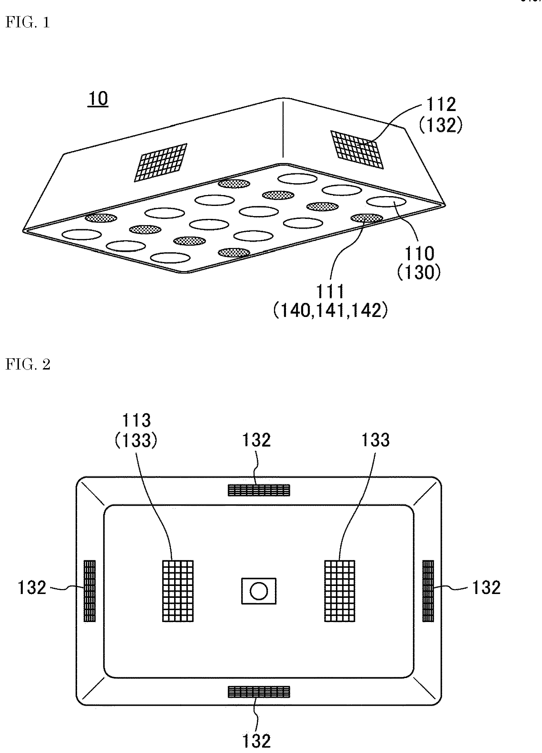

FIG. 1 is a schematic perspective view of a lighting device 10 according to a first embodiment. FIG. 2 is a schematic top view of the lighting device 10. The lighting device 10 includes a plurality of white light sources 110, a plurality of auxiliary light sources 111, first solar panels 132 that function as a light detector, and second solar panels 133 that function as a light amount measuring unit 113. A total of two sets of the white light sources and auxiliary light source(s) 111 are arranged such that each of the two sets includes three rows of the white light sources and auxiliary light sources 111 in which a single row of the auxiliary light source(s) 111 arranged in M columns (M is 1 or greater) is disposed between adjacent rows of the white light sources 110 arranged in two rows and N columns (N is one or greater). The arrangement of the white light sources and the auxiliary light sources is not limited to this example. For example, white light sources and auxiliary light sources may be alternately arranged in each row, or may be arranged in other arrangements.

The white light source 110 in the lighting device 10 includes a plurality of white light-emitting devices 130. For example, white LED can be employed for the white light-emitting device 130. Appropriate combination of a light-emitting element with an emission peak in the violet to blue range and a phosphor that receives light from the light-emitting element and emits light having a color such as blue, green, yellow, orange, red, or far-red allows for obtaining white LED.

The auxiliary light source 111 in the lighting device 10 includes a plurality of auxiliary light-emitting devices 131. For the auxiliary light-emitting device 131, light-emitting device with a ratio R/B, which is the ratio of a photon flux R of red light in the wavelength range of 620 nm or greater and less than 700 nm to a photon flux B of blue light in the wavelength range of 400 nm or greater and 490 nm or less, of greater than 4 and 50 or less and a ratio R/Fr, which is the ratio of the photon flux R to a photon flux Fr of far-red light in the wavelength range of 700 nm or greater and 780 nm or less, of 0.1 or greater and 10 or less is employed.

The light-emitting device as described above can be provided using, for example, a light-emitting element with a peak emission wavelength in the wavelength range of 380 nm or greater and 490 nm or less (hereinafter also referred to as the "near-ultraviolet to blue range"), a first phosphor adapted to be excited by light emitted from the light-emitting element and to emit light with at least one peak emission wavelength in the wavelength range of 580 nm or greater and less than 680 nm, and a second phosphor adapted to be excited by the light emitted from the light-emitting element and to emit light with at least one peak emission wavelength in the wavelength range of 680 nm or greater and 800 nm or less.

Examples of the first phosphor include Mn⁴⁺-activated fluorogermanate phosphors, Eu²⁺-activated nitride phosphors, Eu²⁺-activated alkaline earth sulfide phosphors, and Mn⁴⁺-activated halide phosphors. For the first phosphor, a single phosphor selected from the phosphors described above may be used singly, or two or more of the phosphors described above may be used in combination.

The second phosphor is at least one phosphor selected from the group consisting of a first aluminate phosphor of a composition containing Al and Cr and a second aluminate phosphor of a composition containing a first element Ln, including at least one element selected from the group consisting of rare earth elements other than Ce, Al, a second element M, when appropriate, including at least one element selected from the group consisting of Ga and In, Ce, and Cr, where the molar composition ratio of Ce is the product of a variable x and 3, the molar composition ratio of Cr is the product of a variable y and 3, the variable x is more than 0.0002 and less than 0.50, and the variable y is more than 0.0001 and less than 0.05, with a total molar composition ratio of Al and the second element M being 5.

Alternatively, for the auxiliary light-emitting device 131, light-emitting device with a ratio R/B, which is the ratio of the photon flux R in the range of 620 nm or greater and less than 700 nm to the photon flux B in the range of 380 nm or greater and 490 nm or less, of 2.0 or greater and 4.0 or less and a ratio R/FR, which is the ratio of the photon flux R in the range of 620 nm or greater and less than 700 nm to a photon flux FR in the range of 700 nm or greater and 780 nm or less, of 0.7 or greater and 13.0 or less may be employed. In the case in which this light-emitting device is distinguished from the light-emitting device described above, the light-emitting devices are represented as a first light-emitting device 140 and a second light-emitting device 141, respectively.

The second light-emitting device 141 can be provided using, for example, a light-emitting element with a peak emission wavelength in the near-ultraviolet to blue range, the first phosphor adapted to be excited by light emitted from the light-emitting element and to emit light with at least one peak emission wavelength in the range of 580 nm or greater and less than 680 nm, and the second phosphor adapted to be excited by the light emitted from the light-emitting element and to emit light with one or more peak emission wavelengths in the range of 680 nm or greater and 800 nm or less. For the first phosphor, substantially the same phosphor as in the first light-emitting device 140 described above can be used.

The second phosphor is a phosphor of a composition of an aluminate salt containing a first element Ln including at least one element selected from the group consisting of rare earth elements other than Ce, Al, a second element M including at least one element selected from the group consisting of Ga and In, Ce, and Cr, where the molar composition ratio of Ce is the product of the variable x and 3, the molar composition ratio of Cr is the product of the variable y and 3, the variable x is greater than 0.0002 and less than 0.50, and the variable y is greater than 0.0001 and less than 0.05, with the molar composition ratio of the second element M being 5.

Alternatively, for the auxiliary light-emitting device 131, light-emitting device with a ratio R/B, which is a ratio of the photon flux R of red light in the range of 620 nm or greater and 700 nm or less to the photon flux B of blue light in the range of 400 nm or greater and 490 nm or less, of more than 20 and not more than 200 may be employed. This light-emitting device will be referred to as a "third light-emitting device 142" when being distinguished from the first light-emitting device 140 and the second light-emitting device 141 described above.

The third light-emitting device 142 can be provided using a light-emitting element with a peak emission wavelength in the near-ultraviolet to blue range and a red phosphor that is excited by light emitted from the light-emitting element to emit light with at least one peak emission wavelength in the range of 580 nm or greater and 680 nm or less.

Examples of the red phosphor include Eu²⁺-activated nitride phosphors, Mn⁴⁺-activated fluorogermanate phosphors, Eu²⁺-activated alkaline earth sulfide phosphors, and Mn⁴⁺-activated halide phosphors. For the red phosphor, a single phosphor selected from the phosphors described above may be used singly, or two or more of the phosphors may be used in combination.

For the plurality of-emitting devices 131 of the auxiliary light source 111, a plurality of light-emitting devices may be appropriately selected from the first light-emitting device 140, the second light-emitting device 141, and the third light-emitting device 142, and used in combination. Other light-emitting devices such as s light-emitting device using red LED or a light-emitting device using far-red LED without phosphor may be employed.

The first light-emitting device 140 and the second light-emitting device 141 radiate light in the red and far-red ranges. The first light-emitting device 140 has a larger ratio R/B than the second light-emitting device 141. In other words, emission of blue light from the first light-emitting device 140 is reduced more greatly. For example, when using in combination with the white light sources 110 or natural light such as sunlight such that auxiliary emission of blue light by the auxiliary light sources 111 is not required, it can be selected that the first light-emitting device 140 is employed.

The third light-emitting device 142 radiates less far-red light than the first light-emitting device 140 and the second light-emitting device 141 but can more intensely emit red light. In the case in which supplementation by red light is to be enhanced rather than far-red light, it can be selected that the third light-emitting device 142 is employed. For example, by using an auxiliary light source 111 including a light-emitting device that does not radiate far-red light but radiates red light like the third light-emitting device 142 and a light-emitting device that radiates red and far-red light like the first light-emitting device 140 or the second light-emitting device 141, red light and far-red light can be supplemented to natural light or white light in good balance. The expression "far-red light is not radiated" encompasses not only the state the far-red light is not radiated at all but also the state in which the far-red light is hardly radiated.

The first solar panels 132 and the second solar panels 133 include solar cells and convert light energy from the sun into electric power. The lighting device 10 includes a plurality of first solar panels 132 each of which is disposed on a respective one of lateral surfaces of the lighting device 10. A rising/setting detector 112 that detects rising and setting of the sun based on the value of the electric power converted by the first solar panel 132 is implemented. The lighting device 10 includes one or more second solar panels 133 disposed on an upper surface of the lighting device 10. The light amount measuring unit 113 that measures the amount of natural light such as sunlight applied without the lighting device 10 based on the value of the electric power resulting from conversion by the second solar panel 133 is implemented.

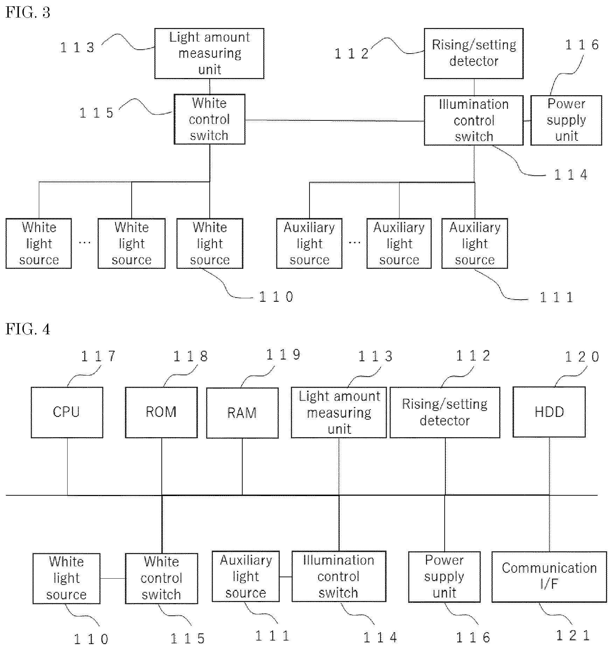

FIG. 3 schematically shows an example of the hardware configuration of the lighting device 10. The lighting device 10 includes a power supply unit 116, an illumination control switch 114, and a white control switch 115 in addition to the white light sources 110, the auxiliary light sources 111, the rising/setting detector 112, and the light amount measuring unit 113 described above. The power supply unit 116 supplies electric power for supplementing light by the white light sources 110 and the auxiliary light sources 111. The illumination control switch 114 controls on and off of the supply of electric power to control supplementation of light by the white light sources 110 and the auxiliary light sources 111. Similarly, the white control switch 115 controls supplementation of light by the white light sources 110. When the illumination control switch 114 is off, the white light sources 110 do not emit light even if the white control switch 115 is on. When the white control switch 115 is off, the white light sources 110 do not emit light even if the illumination control switch 114 is on.

FIG. 4 schematically shows another example of the hardware configuration of the lighting device 10. Similarly to FIG. 3, the white light sources 110, the auxiliary light sources 111, the rising/setting detector 112, the light amount measuring unit 113, the power supply unit 116, the illumination control switch 114, and the white control switch 115 are included.
The white light sources 110 are indicated by a single block, and the auxiliary light sources 111 are also indicated by a single block for convenience. In the example shown in FIG. 4, a communication I/F 121, a read only memory (ROM) 118, a random access memory (RAM) 119, a central processing unit (CPU) 117, and a hard disk drive (HDD) 120 are further included. These pieces of hardware are connected to each other via buses.

The communication I/F 121 is an interface used for connection to a network. The HDD 120 is a nonvolatile memory storing computer programs and data. The ROM 118 is a nonvolatile semiconductor memory that can store computer programs and data even when power is turned off. The RAM 119 is a volatile semiconductor memory that temporarily stores computer programs and data. The CPU 117 is an arithmetic unit that implements control and functions of the overall lighting device 10 by reading a computer program or data from a memory such as the ROM 118 and the HDD 120 into the RAM 119 and executing processing.

In the example shown in FIG. 4, the CPU 117 controls emission of light from the white light sources 110 and the auxiliary light sources 111 in the lighting device 10. Specifically, controlling emission of the light is performed by acquiring the values of the electric power obtained by the first solar panels 132 and the second solar panels 133 and determining whether the illumination control switch 114 and the white control switch 115 are to be turned on or off based on the acquired values.

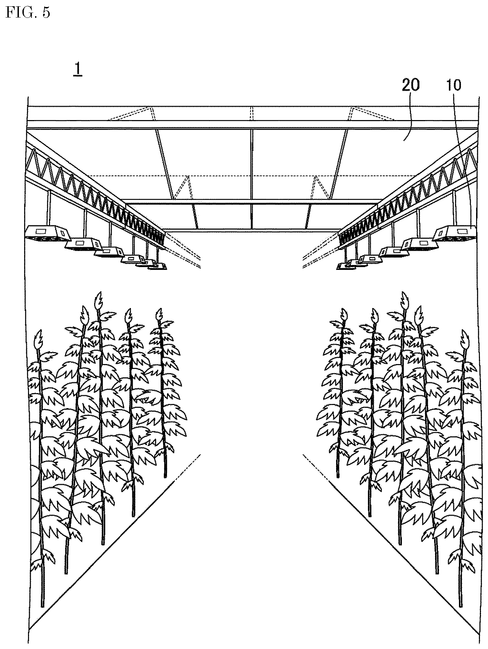

FIG. 5 is a system configuration diagram of a growing system 1 including the lighting device 10.
In the growing system 1, a plurality of lighting devices 10 are installed on the ceiling of a greenhouse 20. Each lighting device 10 is connected to wirings that is also installed on the ceiling and is supplied with electric power. The ceiling and the lateral surfaces of the greenhouse 20 are covered with light-transmissive glass, plastic, or the like so that light from the sun shines into the greenhouse 20.

In the growing system 1, a light-transmissive greenhouse 20 is employed in order to introduce as much natural light such as sunlight as possible. However, in areas with intense natural light such as sunlight, such as a country right on the equator, plants may not grow when natural light is directly admitted because the light is too intense. In such a case, it is possible to constitute the growing system 1 including a plurality of lighting devices 10 in the greenhouse 20 with low transmittance. For example, using a greenhouse 20 with a transmittance of about 60% to 80% in the R, G, B, and Fr wavelength regions can be considered.

Next, operation of the lighting devices 10 in the growing system 1 in which the lighting devices 10 have been installed in the greenhouse 20 will be described. The illumination control switch 114 is turned off when electric power of a predetermined value or greater is not obtained from any of the first solar panels 132, so that illumination by the white light sources 110 and the auxiliary light sources 111 is stopped. The switch is maintained on while electric power is supplied from the power supply unit 116 and while electric power of the predetermined value or greater is obtained from any of the first solar panels 132.

The predetermined value is set to a first threshold so as to distinguish the state in which the sun has set and night has come and other states. That is, the first threshold is desirably set such that electric power to be obtained will be the predetermined value or greater in the period from the time when the sun rises above the horizon and it shines bright to the time when the sun sets, regardless of whether the weather is sunny, cloudy, or rainy. The first threshold does not have to be determined by strictly defining the boundary between night and other states. It is sufficient that the first threshold is set so that illumination by the white light sources 110 and the auxiliary light sources 111 can be controlled approximately according to the rising and setting of the sun, and a slight deviation in time is acceptable.

Each of the first solar panels 132 is arranged on a respective one of the lateral surfaces of the lighting device 10, which can offer flexibility in arrangement when the orientation of the lighting device 10 is determined according to the rising and setting of the sun. The white light sources 110 and the auxiliary light sources 111 radiate light toward plants, and the white light sources 110 and the auxiliary light sources 111 therefore face the ground. The orientation when the lighting devices 10 are aligned is also adjusted according to the alignment of the plants. Hence, a detection area for measuring the irradiance of light is provided on each lateral surface of the lighting device 10 so that the rising and setting of the sun can be appropriately detected.

The detection areas may not necessarily be provided on all lateral surfaces. The rising/setting detector 112 of the lighting device 10 according to the first embodiment includes at least a first detection area for detecting sunrise and a second detection area for detecting sunset. As specific examples thereof, first solar panels 132 are respectively arranged on opposite lateral surfaces. The first solar panels 132 may be physically separated from each other or may be constituted of a single solar panel.

With the rising/setting detector 112, the lighting device 10 operates to supplement light according to the rising and setting of the sun. That is, when the sun rises, the state in which electric power of the first threshold or greater is not obtained from any of the first solar panels 132 changes into the state in which electric power obtained from at least the first solar panel 132 in the first detection area is the first threshold or greater. Accordingly, the illumination control switch 114 is turned on in response to the sunrise, and supplementing the light by the white light sources 110 and the auxiliary light sources 111 is started.

After that, while the sun moves, any of the first solar panels 132 produces electric power of the first threshold or greater unless it gets substantially as dark as night, which causes the illumination control switch 114 to keep on-state. The first solar panel 132 in the second detection area produces larger electric power than the other first solar panels 132 when the sun is setting, while the electric power from the first solar panel 132 in the second detection area becomes less than first threshold due to the sunset. At this time, electric power obtained from every first solar panel 132 inevitably becomes less than the first threshold, causing the illumination control switch 114 to be turned off. Supplementation of light by the white light sources 110 and the auxiliary light sources 111 stops until the next morning.

The lateral surfaces of the lighting device 10 are inclined inward toward the upper side, or in the direction from the intersections with a light radiation surface, on which the white light sources 110 and the like are arranged to perform illumination, toward the second solar panels 133. This structure is designed in consideration of the effects of light from the white light sources 110 and the auxiliary light sources 111 on conversion into electric power by the first solar panels 132. That is, if electric power of a certain value or greater is obtained from light from the white light sources 110 and the auxiliary light sources 111 after the sun has set, such control to turn off the illumination control switch 114 in response to sunset is not achieved.

However, if the first threshold value is set with correction (upward adjustment) to compensate for the effects of light from the white light sources 110 and the auxiliary light sources 111, there may be a case in which the switch is not turned on even though the sun has already risen. In a method in which a light-shielding plate is added to block light from the white light sources 110 and the auxiliary light sources 111, use of natural light such as sunlight is reduced. Also for this reason, inclination is provided as a structure that reduces the effects of light from the white light sources 110 and the auxiliary light sources 111 on electric power to be obtained from the first solar panels 132 as much as possible without obstructing illumination with natural light. The inclination does not have to be provided, but another method such as correction can be employed.

When electric power generated by conversion by the second solar panels 133 is a predetermined value or greater, the white control switch 115 is turned off and the electric power supply to the white light sources 110 is stopped. This result in transition to a state in which emission of light from the white light sources 110 is interrupted and supplementation of light by the auxiliary light sources 111 continues. Illumination by the white light sources 110 is thus stopped when plants are irradiated with sufficient natural light from the sun or the like.

Preventing excessive illumination by supplementation of light by the white light sources 110 not only provides a good growth environment but saves energy. The predetermined value for the second solar panels 133 is preferably set to a second threshold, which is the lower limit value to determine that the plants receive sufficient light. The value can vary according to the plants to be grown and is preferably set on the basis of an appropriate amount of white light for promoting the growth of the plants. The second threshold is at least higher than the first threshold. With the second solar panels 133 facing upward, excessive illumination is prevented in the daytime, in which the irradiance of sunlight is generally high.

Next, when electric power resulting from conversion by the second solar panels 133 becomes less than a predetermined value, the white control switch 115 is turned on, and emission of light by the white light sources 110 starts again. However, the white light sources 110 do not emit light when the illumination control switch 114 is off. On and off of supplementation of light by the white light sources 110 is thus controlled during hours of sunshine, but the white light sources 110 do not emit light after sunset until the illumination control switch 114 is turned on in response to sunrise.

Not necessarily all the white light sources 110 may be caused to stop supplementation of light by the white control switch 115. For example, supplementation of light by some of the white light sources 110 may be stopped, or radiation of light from some of the white light-emitting devices 130 may be stopped. Illumination may not be stopped, but the intensity may be reduced or increased. That is, the degree of emission of light by the white light sources 110 is increased to supplement light when natural light decreases and reduced to remove excess light when natural light increases. The light amount measuring unit 113 may be constituted of a single second solar panel 133 or a plurality of second solar panels 133.

As described above, the lighting device 10 in the growing system 1 according to the first embodiment includes illumination control means configured to control supplementation of light (degree of emission of light) by the white light sources 110 and the auxiliary light sources 111 in response to the rising and setting of the sun. Further, illumination control means configured to control supplementation of light by the white light sources 110 corresponding to the irradiance (degree of illumination) of natural light is also included. With this constitution, the start and the end of supplementation of light by the white light sources 110 or the auxiliary light sources 111 (emission control) can be dynamically controlled according to the cycle of a day from sunrise to sunset.

The rising/setting detector 112 inputs a rising/setting parameter corresponding to the irradiance, and the illumination control means controls supplementation of light based on the rising/setting parameter and the first threshold. The light amount measuring unit 113 inputs a light amount parameter corresponding to the irradiance, and the illumination control means controls supplementation of light based on the light amount parameter and the second threshold.

The rising/setting parameter given by the rising/setting detector 112 is input not only at sunrise and sunset and the design is such that the detection sensitivity of the rising/setting parameter is high at sunrise and sunset. The light amount parameter given by the light amount measuring unit 113 is input not only at sunrise and sunset and the design is such that the measurement sensitivity of the light amount parameter is higher at noon (when the sun reaches its highest point) than at sunrise and sunset.

### Second Embodiment

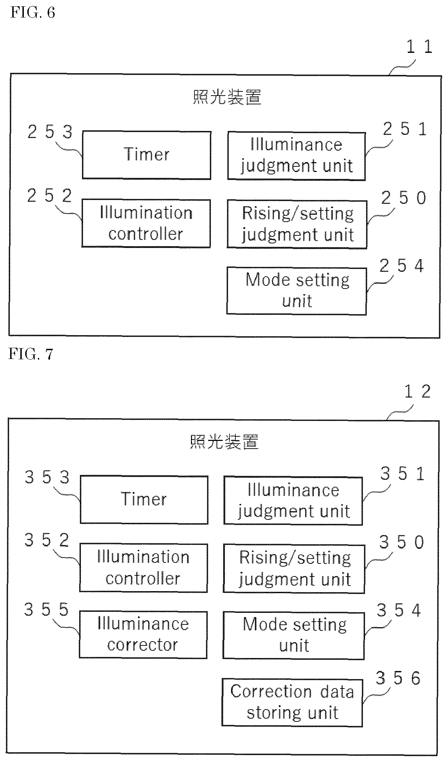

FIG. 6 is a functional block diagram showing functions of a lighting device 11 in the growing system 1 according to a second embodiment. The functions and processing described on the basis of FIG. 6 are implemented by, for example, operation of the CPU 117 in the lighting device 11 having the hardware configuration shown in FIG. 4. Accordingly, the lighting device 11 according to the second embodiment may have substantially the same hardware configuration as the lighting device 10 of the first embodiment.

The growing system 1 according to the second embodiment provides a mechanism that irradiates plants with light for more than the hours of sunshine in addition to the control of on and off of supplementation of light linked with the rising and setting of the sun as described regarding the first embodiment.

A rising/setting judgment unit 250 determines the rising and setting of the sun based on the rising/setting parameter obtained by the rising/setting detector 112. An illuminance judgment unit 251 determines the degree of illumination based on the light amount parameter obtained by the light amount measuring unit 113. An illumination controller 252 controls whether light is to be supplemented by the white light sources 110 and the auxiliary light sources 111 based on the result of recognition by the rising/setting judgment unit 250. The illuminance judgment unit 251 also controls whether to execute supplementation of light by the white light sources 110 based on the result of determination. Whether light is to be supplemented by the white light sources 110 and the auxiliary light sources 111 is controlled on the basis of a timer 253.

A mode setting unit sets to a mode selected by a user from among a first mode in which supplementation of light is linked with the rising and setting of the sun, a second mode in which the start of supplementation of light for a predetermined period of time is linked with sunrise, and a third mode in which the end of supplementation of light for a predetermined period of time is linked with sunset. The mode setting unit also sets the light supplementation times in the second and third modes. These settings can be made by, for example, receiving input from a computer connected to the network via the communication I/F 121. The timer 253 provides notification that the set light supplementation time has elapsed.

The operation control of the lighting device 11 in the growing system 1 according to the second embodiment varies according to the selected mode. The operation control in the first mode is substantially the same as the operation control performed by the lighting device 11 of the first embodiment.

In the case in which the second mode has been set, when the rising/setting judgment unit 250 determines that the rising/setting parameter indicating the value of electric power obtained from any of the first solar panels 132 is the first threshold or greater, a white light controller starts emission of light from the white light sources 110, an auxiliary light controller starts emission of light from the auxiliary light sources 111, and the timer 253 is started. Determination by the illuminance judgment unit 251 is active in the period of time from the start to the end of the timer 253. The white light controller stops emission of light from the white light sources 110 when the illuminance judgment unit 251 determines that the light amount parameter indicating the value of electric power obtained from the second solar panels 133 is the second threshold or greater. At this time, emission of light from the white light sources 110 is stopped even if the rising/setting parameter is the first threshold or greater.

Emission of light from the white light sources 110 is started again in the case in which the illuminance judgment unit 251 determines that the light amount parameter indicating the value of electric power obtained from the second solar panels 133 is less than the second threshold. Emission control of the white light sources 110 by the illuminance judgment unit 251 functions until the timer 253 expires.

In the case in which the second mode has been set, the rising/setting judgment unit 250 does not perform recognition of sunset. That is, determining whether the rising/setting parameter has become less than first threshold is not executed. Instead, when the timer 253 expires, the white controller stops emission of light by the white light sources 110, and the auxiliary light controller stops emission of light by the auxiliary light sources 111. Accordingly, when the light supplementation time has elapsed from sunrise, supplementation of light by the lighting device 11 is suspended until next sunrise. In the case in which supplementation of light is stopped on the basis of the elapse of a predetermined period of time, the amount of supplementation of light may be gradually reduced to take a certain period of time to stop supplementation of light.

In the case in which the third mode has been set, the timer 253 is started when the rising/setting judgment unit 250 determines that the rising/setting parameter is less than the first threshold. The timer 253 gives notification of expiration when a time period determined by subtracting the light supplementation time from the duration of a day has elapsed. When the notification of expiration of the timer 253 is received, the white light controller starts emission of light from the white light sources 110, and the auxiliary light controller starts emission of auxiliary light. Control of the white light sources 110 based on determination by the illuminance judgment unit 251 is active while the timer 253 is off, or in the period of time from the notification of expiration of the timer 253 to the start of the timer 253. The elapse of the light supplementation time can thus correspond to sunset.

If there is a large difference between the sunset of the previous day and the sunset of that day, timings of the elapse of the light supplementation time and the sunset greatly differ from each other. However, there is almost no environment in which the sunset time greatly changes in a day except for specific places such as the South Pole and the North Pole. Accordingly, the timings of the sunset time of the next day and the end of supplementation of light do not greatly differ from each other in principle if the timing of the start of supplementation of light is determined on the basis of the sunset time of the previous day, and appropriate control of supplementation of light can be performed.

In the growing system 1 of the second embodiment, either supplementation of light according to the hours of sunshine or supplementation of light for a period of time longer than the hours of sunshine can be appropriately selected according to the intention of a user. Alternatively, supplementation of light for a period of time shorter than the hours of sunshine can be selected. As described above, the user can select one of a plurality of control patterns, and the lighting device 11 stores the selected control pattern as the settings. Such control of the modes can be set in units of the lighting device 11, and a plot and another plot in the greenhouse 20 can be controlled in different modes.

For example, in the autumn and winter, in which the hours of sunshine are short, supplementation of light can be controlled in the first mode in a plot in which seasonal vegetables are cultivated, and supplementation of light can be controlled in the second or third mode in a plot in which vegetables suited to summer, in which the hours of sunshine are long, are cultivated.

The lighting device 11 that can be set to an appropriate mode among the first to third modes has been described as the lighting device 11 applied to the growing system 1 according to the second embodiment, but the mode selection function may not be provided. That is, lighting devices 11 corresponding to the respective modes may be provided, and the lighting device 11 corresponding to the mode to be employed may be installed. In this sense, the lighting device 11 without the mode setting unit can also constitute the growing system 1 according to the second embodiment.

In the case in which the lighting device 11 corresponding to the second mode or the lighting device 11 corresponding to the third mode is implemented, the number of the first solar panels 132 may be one. It is sufficient that one of sunrise and sunset can be detected, so that supplementation of light can be controlled using a single first solar panel 132 disposed only on a single lateral surface if the lighting device 11 is arranged such that the orientation of the first solar panel 132 corresponds to the direction of sunrise or sunset.

### Third Embodiment

In the above-described lighting devices, the second solar panels 133 are installed on the upper surface. The installation surface is not limited to the upper surface, but the position of the sun changes over time while the second solar panels 133 are oriented in a specific direction. Hence, the light receiving conditions of the second solar panels 133 change unless the area in which the second solar panels 133 receive sunlight moves to follow the movement of the sun, and it can be considered that the value of electric power generated by conversion by the second solar panels 133 varies even if the same intensity of light is radiated from the sun.

If a plurality of second solar panels 133 are disposed on a hemispherical surface opposite to the surface on which the light sources are disposed, the amount of light can be measured in consideration of the movement of the sun. Differences in the light receiving conditions caused by the movement of the sun can be reduced by performing determination on the basis of the value of electric power obtained from a second solar panel 133 approximately facing the sun among the second solar panels 133.

The second solar panel 133 providing the largest electric power among the second solar panels 133 can be regarded as the second solar panel 133 approximately facing the sun.
The accuracy of the orientation with respect to the sun depends on the arrangement of the solar panels. The accuracy is enhanced by covering the hemispherical surface with a large number of solar panels with small areas. However, the structure of the device is expected to become complex, leading to increase in costs.

Implementation of the growing system 1 including such a lighting device is also within the scope of the disclosure of the invention of the present application, but another implementation method will be described regarding a lighting device 12 in the growing system 1 according to a third embodiment. The growing system 1 according to the third embodiment stores correction data that has been obtained in advance by measurements and allows for more accurate determination of illuminance than the first and second embodiments by reducing the differences in the light receiving conditions on the basis of the correction data.

FIG. 7 is a functional block diagram of the lighting device 12 according to the third embodiment. The functions and processing described on the basis of FIG. 7 are implemented by, for example, operation of the CPU 117 in the lighting device 12 having the hardware configuration shown in FIG. 4. Accordingly, the lighting device 12 according to the second embodiment may have substantially the same hardware configuration as the lighting device 10 of the first embodiment.

The lighting device 12 differs from the lighting device 11 of the second embodiment in that an illuminance corrector 355 and a correction data storing unit 356 are included. The correction data storing unit 356 stores the correction data used for determining a correction parameter indicating a correction value for the light amount parameter obtained by the light amount measuring unit 113. The illuminance corrector 355 determines the correction parameter for the obtained light amount parameter and performs correction. The illuminance judgment unit 351 determines whether a value is the second threshold or greater on the basis of the corrected light amount parameter.

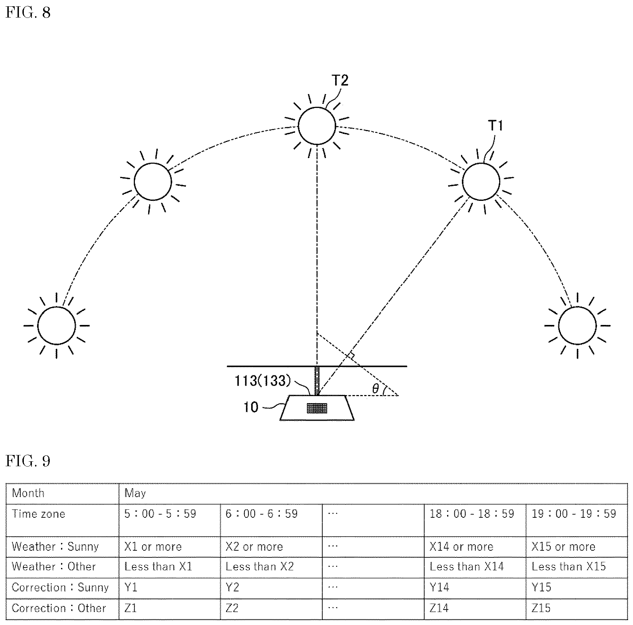

FIG. 8 schematically shows the positional relationship between the lighting device 12 and the sun to illustrate the correction data to be obtained. The lighting device 12 is stationary placed, and the light amount measuring unit 113 is therefore also stationary placed on its upper surface. On the other hand, the declination of the sun changes over time, so that the angle between the light amount measuring unit 113 and the sun changes. For example, provided that the sun is located at a position T1 shown in FIG. 8 at a time t1, the second solar panel 133 is required to be inclined at an angle θ to measure the amount of natural light from the sun located at the position T1 from the front.

Hence, if the difference between the amount of light measured in the state of facing the sun from the front and the amount of light measured at the angle θ is stored as the correction data, the amount of light in the state of facing the sun from the front can be calculated on the basis of the amount of light measured by the second solar panel 133. The correction data indicates that difference.

On the other hand, if the sun is located at a position T2 a time t2, there is no difference because the second solar panel 133 is facing the sun from the front, so that correction is not required. As described above, measurement conditions for obtaining the correction data vary according to the position of the sun. Hence, it is desirable to obtain measurement data in the case of facing the sun from the front and in the case of fixing to the lighting device 12 in the same time zone in the same month in similar climates and to collect a plurality of pieces of data in similar climates so as to calculate the correction data by means of averaging or statistics.

FIG. 9 schematically shows an example of the configuration of correction data stored in the correction data storing unit 356. The correction data includes items of the month, the time zone, the weather classification, and the correction parameter, and weather determination criteria and a correction parameter are set for each weather classification. The correction data is prepared for each of the months of a year, but FIG. 9 shows the correction data for May as an example. The correction data may be provided not in units of a month but in minor units such as every two weeks, or the correction data may be provided in units of a season including a plurality of months. The correction data for each month is further divided according to time zones. The example shown in FIG. 9 is divided in units of an hour, but the units of time may be shorter or longer.

The correction data includes the weather determination criteria and the correction parameter corresponding to the weather for each month and time zone. In the example shown in FIG. 9, the weather classifications include "weather: sunny" and "weather: other", and weathers are classified into sunny and the others. More detailed weather classifications may be used. For example, detailed classification may be performed according to the difference in the degree of sunny weather. How the weather classifications is can be set appropriately. Weather determination criteria for determining that a weather belongs in that weather classification are established for each classified weather.

The weather determination criteria are determined on the basis of measured values obtained under substantially the same conditions as the measurement conditions when the lighting device 12 is installed in the growing system 1 in a time zone of a day belonging in that weather classification. As the correction is performed corresponding to the determined weather classification, the weather classification is required to be determined on the basis of the light amount parameter before the correction. Hence, it is preferable to compile measured values obtained in a certain time zone in a certain month for each weather classification, compare the measurement results compiled for each weather classification, and determine criterion values that do not correspond to each other. In the example shown in FIG. 9, in the period of time from five o'clock to six o'clock, the weather determination criteria are set such that a weather is put into the sunny weather classification if the light amount parameter obtained from the amount of light measured by the second solar panel 133 is X1 or more and such that the weather is put into the other weather classification if the light amount parameter is less than X1.

The correction parameter is designated corresponding to the weather classification. As for the example shown in FIG. 9, the correction parameter in the case in which the weather classification is "sunny" in a month and time zone concerned is obtained from the measurement results in the corresponding time zone of a day belonging in the sunny weather classification. Specifically, the correction parameter is determined on the basis of the difference between measured values obtained under substantially the same conditions as the measurement conditions when the lighting device 12 is installed in the growing system 1 and measured values in the case of confronting the sun. The correction parameter may be determined on the basis of values calculated by means of averaging or statistics from measurement results in a plurality of sunny days. The same applies to the other weathers to determine the correction parameter for each weather classification. In the example shown in FIG. 9, in the period of time from five o'clock to six o'clock, correction is performed on the basis of a correction parameter Y1 if the weather classification is "sunny", and correction is performed on the basis of a correction parameter Z1 if the weather classification is "other".

The illuminance corrector 355 performs correction using the correction data stored in the correction data storing unit 356. Specifically, when the light amount parameter obtained by the light amount measuring unit 113 is acquired, the month and the time zone corresponding to the time of acquisition are identified. Next, the weather classification to which the obtained light amount parameter corresponds is determined from the weather determination criteria in the identified month and time zone. In the example shown in FIG. 9, whether it is sunny is determined. The correction parameter corresponding to the identified month and time zone and the determined weather classification is acquired, and the light amount parameter is corrected on the basis of the correction parameter. After that, the illuminance judgment unit 351 acquires the corrected light amount parameter and judges the illuminance on the basis of the corrected light amount parameter.

By storing the correction parameter determined in consideration of differences in measurement results between measurement conditions under which the lighting device 12 measures the amount of light and measurement conditions when the sun is actually confronted and by performing correction using the correction parameter as described above, the corrected light amount parameter accuracy reflects the irradiance of actual radiation on plants. Hence, the accuracy of control based on the judgment results by the illuminance judgment unit 351, or such control that supplementation of light by the white light sources 110 is stopped when the irradiance of natural light is sufficient, is enhanced.

By performing correction corresponding to the weather classification, such a situation that radiation is judged to be sufficient as a result of correction using the correction parameter for sunny weather and that supplementation of light by the white light sources 110 is stopped while the weather is actually cloudy and radiation of natural light is not sufficient can be avoided.

That is, control of supplementation of light can be performed corresponding to the weather classification by specifying a weather classification from among a plurality of weather classifications and controlling supplementation of light using the light amount parameter corrected on the basis of the weather classification. The amount of supplementation of light by the white light sources may be adjusted on the basis of the corrected light amount parameter. For example, the amount of white light required may be set, and the lighting device may supplement white light sources compensating for the difference between the set value and the corrected light amount parameter. According to the weather classification, supplementation of light by the auxiliary light sources may be controlled, or supplementation of light by both of the white light sources and the auxiliary light sources may be controlled.

### <Fourth Embodiment>

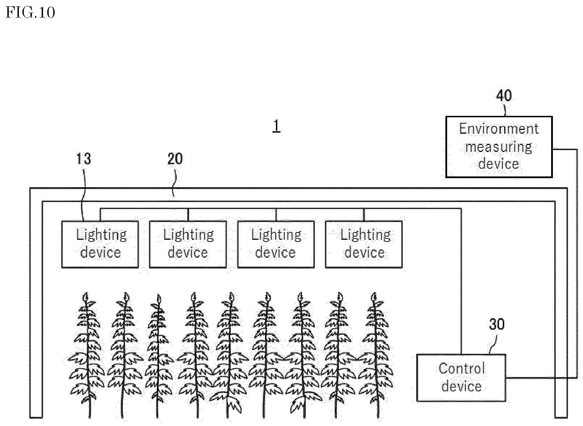

A fourth embodiment is another example of the constitution of the growing system 1 described referring to the first to third embodiments. FIG. 10 is a system configuration diagram of the growing system 1 according to the fourth embodiment. As shown in FIG. 10, the growing system 1 according to the fourth embodiment differs in that it includes an environment measuring device 40 and a control device 30. A lighting device 13 according to the fourth embodiment differs from the lighting device 13 of the first embodiment in that the light amount measuring unit 113 and the rising/setting detector 112 are not included. Accordingly, the lighting device 13 according to the fourth embodiment may not include the first solar panels 132 and the second solar panels 133.

Measurements performed using the first solar panels 132 and the second solar panels 133 in the lighting device 13 are performed by the environment measuring device 40 in the growing system 1 of the fourth embodiment. Hence, the environment measuring device 40 is located at a position that does not block plots, such as on or above the greenhouse 20. The environment measuring device 40 measures the rising/setting parameter and the light amount parameter and may perform more detailed measurements.

The control device 30 may be constituted of a common computer including a CPU, a ROM, a RAM, an HDD, a communication I/F, and the like, and measurement results obtained by the environment measuring device 40 are sent to the control device 30. The control device 30 controls supplementation of light by the white light sources 110 and the auxiliary light sources 111 in each lighting device 13 on the basis of the measurement results. That is, the control device 30 judges the rising/setting and the illuminance, and on and off of the illumination control switch 114 and the white control switch 115 of the lighting device 13 are controlled on the basis of the judgment results. Specific control is substantially the same as the control described for the first to third embodiments.

The growing system 1 of the fourth embodiment does not require constitutions for measuring the environment such as the rising/setting detector 112 and the light amount measuring unit 113 for each lighting device 13. In a large-scale growing system 1 including a large number of lighting devices 13, advantages such as cost benefits, centralized control, and integrated management can be offered.

### <Regarding First Light-emitting Device 140>

Description of the first light-emitting device 140 above is supplemented. The first phosphor preferably includes a nitride phosphor of a composition containing at least one element selected from Sr and Ca, Eu, Al, and Si. Examples of the first phosphor include a nitride phosphor represented by the composition formula (Sr,Ca)AlSiN₃:Eu.

A plurality of elements marked off by commas (,) in a composition formula in the present specification indicate that at least one element of these elements is contained in the composition. A plurality of elements marked off by commas (,) in a composition formula include at least one element selected from among a plurality of elements marked off by comma(s) in the composition, and two or more of these elements may be contained in combination. In a formula representing the composition of a phosphor, the part before a colon (:) represents a host crystal, and the part after the colon (:) represents activating element(s).

The first phosphor preferably includes a nitride phosphor having the composition represented by Formula (I) below.

(Ca_{1-p-q}SrₚEu_{q})AlSiN₃ (I)

In Formula (I), p and q are numbers satisfying 0 ≤ p ≤ 1.0, 0 < q < 0.5, and 0 < p + q ≤ 1.0.

In Formula (I) above, Eu is an activating element for the nitride phosphor. In Formula (I) above, the variable q is the molar composition ratio of the activating element Eu in the composition represented by Formula (I) above. The variable q preferably satisfies 0.0001 ≤ q ≤ 0.4, more preferably 0.001 ≤ q ≤ 0.3, further preferably 0.0015 ≤ q ≤ 0.2. In Formula (I) above, the variable p is the molar composition ratio of Sr in the composition represented by Formula (I) above. The variable p preferably satisfies 0.001 ≤ p < 0.9, more preferably 0.002 ≤ p ≤ 0.8, further preferably 0.003 ≤ p ≤ 0.76.

The first phosphor may include a Eu2+-activated nitride phosphor other than the nitride phosphor having the composition represented by Formula (I) above. Examples of the Eu²⁺-activated nitride phosphor include, in addition to a nitride phosphor of a composition containing at least one element selected from Sr and Ca, Eu, Al, and Si, a phosphor containing Eu²⁺-activated aluminum nitride and having a composition containing at least one element selected from the group consisting of alkaline earth metal elements and at least one element selected from the group consisting of alkali metal elements.

The Mn⁴⁺-activated halide phosphor is preferably a phosphor containing a Mn⁴⁺-activated fluoride and having a composition containing at least one element or ion selected from the group consisting of alkali metal elements and the ammonium ion (NH₄⁺) and at least one element selected from the group consisting of the group IV elements and the group XIV elements.

The first phosphor may include at least one phosphor selected from the group consisting of phosphors having any of the compositions represented by Formulas (II) to (VI) below.

(i-j)MgO•(j/2)Sc₂O₃•kMgF2•mCaF2•(1-n)GeO₂•(n/2)M¹O₃:vMn⁴⁺ (II)

In Formula (II), M¹ is at least one selected from the group consisting of Al, Ga, and In, and i, j, k, m, n, and v are numbers respectively satisfying 2 ≤ i ≤ 4, 0 ≤ j < 0.5, 0 < k < 1.5,0 ≤ m < 1.5,0 < n < 0.5, and 0 < v < 0.05.

M²_{d}M³ₑM⁴_{f}Al₃-gSigNₕ (III)

In Formula (III), M² is at least one element selected from the group consisting of Ca, Sr, Ba, and Mg, M³ is at least one element selected from the group consisting of Li, Na, and K, M⁴ is at least one element selected from the group consisting of Eu, Ce, Tb, and Mn, and d, e, f, g, and h are numbers respectively satisfying 0.80 ≤ d ≤ 1.05, 0.80 ≤ e ≤ 1.05, 0.001 < f ≤ 0.1,0 ≤ g ≤ 0.5, and 3.0 ≤ h ≤ 5.0.

(Ca₁₋ᵣ₋ₛ₋ₜSrᵣBaₛEuₜ)₂Si₅N₈ (IV)

In Formula (IV), r, s, and t are numbers satisfying 0 ≤ r ≤ 1.0, 0 ≤ s ≤ 1.0, 0 < t < 1.0, and r + s + t ≤ 1.0.

(Ca,Sr)S:Eu (V)

A₂ [M⁵₁₋ᵤ,Mn⁴⁺ᵤF₆] (VI)

In Formula (VI), A is at least one selected from the group consisting of K, Li, Na, Rb, Cs, and NH4⁺, M5 is at least one element selected from the group consisting of the group IV elements and the group XIV elements, and u is a number satisfying 0 < u < 0.2.

In the first aluminate phosphor included in the second phosphor, Cr is an activating element. In the second aluminate phosphor, Ce and Cr are activating elements. In the composition of the second aluminate phosphor, in the case in which the molar composition ratio of Ce is represented as the product of the variable x and 3 and in which the molar composition ratio of Cr is represented as the product of the variable y and 3, the variable x is a number of more than 0.0002 and less than 0.50 (0.0002 < x < 0.50), and the variable y is a number of more than 0.0001 and less than 0.05 (0.0001 < y < 0.05), with a total molar composition ratio of Al and the second element M being 5. This allows the activation amounts of Ce and Cr, which serve as luminescence centers, contained in the crystal structure of the second aluminate phosphor therefore to be in the optimal range, allowing decrease in the emission intensity due to decrease in the luminescence centers, and decrease in the emission intensity due to concentration quenching caused by large activation amounts can be reduced, so that the emission intensity can be enhanced.

The second phosphor preferably includes at least one phosphor selected from the group consisting of a first aluminate phosphor of the composition represented by Formula (VII) below and a second aluminate phosphor of the composition represented by Formula (VIII) below.

(Al_{1-w}Cr_{w})₂O₃ (VII)

In Formula (VII), w is a number satisfying 0 < w < 1.

(Ln_{1-x-y}CeₓCr_{y})₃(Al_{1-z}M_{z})₅O₁₂ (VIII)

In Formula (VIII), Ln is at least one rare earth element selected from the group consisting of rare earth elements other than Ce, M is at least one element selected from the group consisting of Ga and In, and x, y, and z are numbers satisfying 0.0002 < x < 0.50, 0.0001 < y < 0.05, and 0 ≤ z < 0.8.

The second phosphor includes at least one aluminate phosphor. The second phosphor may include two or more aluminate phosphors. Cr contained in the first aluminate phosphor of the composition represented by Formula (VII) above is an activating element. In Formula (VII) above, the product of the variable w and 2 is the molar composition ratio of the activating element Cr in the composition represented by Formula (VII) above. The variable w preferably satisfies 0 < w < 1, more preferably 0.00005 ≤ w ≤ 0.25, further preferably 0.0005 ≤ w ≤ 0.15, even more preferably 0.001 ≤ w ≤ 0.07. If the variable w is more than 0 and less than 1, Cr, which is an activating element serving as the luminescence center, is contained, and the emission intensity is enhanced.

Ce and Cr in Formula (VIII) above are activating elements for the second aluminate phosphor of the composition represented by Formula (VIII) above. In Formula (VIII) above, the product of the variable x and 3 is the molar composition ratio of the activating element Ce in the composition represented by Formula (VIII) above. The variable x preferably satisfies 0.0002 < x < 0.50, more preferably 0.001 ≤ x ≤ 0.35, further preferably 0.0015 ≤ x ≤ 0.30. In Formula (VIII) above, the product of the variable y and 3 is the molar composition ratio of the activating element Cr in the composition represented by Formula (VIII) above. The variable y preferably satisfies 0.0001 < y < 0.05, more preferably 0.0005 ≤ y ≤ 0.04, further preferably 0.001 ≤ y ≤ 0.026.

In Formula (VIII) above, Ln is at least one rare earth element selected from the group consisting of rare earth elements other than Ce, more preferably at least one selected from the group consisting of Y, Gd, Lu, La, Tb, and Pr, further preferably at least one selected from the group consisting of Y, Gd, and Lu.

In Formula (VIII) above, M is at least one element selected from the group consisting of Ga and In and preferably includes Ga. In Formula (VIII) above, the product of the variable z and 5 is the molar composition ratio of the element M that substitutes for Al in Formula (VIII) above. In Formula (VIII) above, the variable z preferably satisfies 0 ≤ z < 0.8, more preferably 0.001 ≤ z < 0.6, further preferably 0.01 ≤ z < 0.4.

The at least one aluminate phosphor included in the second phosphor has a composition constituting the garnet structure and is therefore resistant to heat, light, and water. The at least one aluminate phosphor included in the second phosphor has an absorption peak wavelength of 380 nm or greater and about 470 nm in the excitation/absorption spectrum and therefore sufficiently absorbs light emitted from the light-emitting element, so that the emission intensity of the second phosphor is enhanced. Specific examples of the at least one aluminate phosphor included in the second phosphor include (Al_{0.09}Cr_{0.01})₂O₃, (Al_{0.9943}Cr_{0.0057})₂O₃, (Y_{0.977}Ce_{0.009}Cr_{0.014})₃Al₅O₁₂, (Lu_{0.983}Ce_{0.009}Cr_{0.008})₃Al₅O₁₂, (Lu_{0.9725}Ce_{0.0175}Cr_{0.01})₃Al₅O₁₂, (Y_{0.9735}Ce_{0.0125}Cr_{0.014})₃(Al_{0.8}Ga_{0.2})50₁₂, (Y_{0.7836}Gd_{0.1959}Ce_{0.0125}Cr_{0.008})₃Al₅O₁₂, and (Gd_{0.9675}Ce_{0.0125}Cr_{0.02})₃Al₅O₁₂.

The mass ratio of the second phosphor to a total of 100 mass% of the first and second phosphors is such that the ratio R/B, which is the ratio of the photon flux R of red light in the wavelength range of 620 nm or greater and less than 700 nm to the photon flux B of blue light in the wavelength range of 400 nm or greater and 490 nm or less, is more than 4 and not more than 50 and such that the ratio R/Fr, which is the ratio of the photon flux R to the photon flux Fr of far-red light in the wavelength range of 700 nm or greater and 780 nm or less, is 0.1 or greater and 10 or less. The mass ratio of the second phosphor to a total of 100 mass% of the first and second phosphors is preferably 0.5 mass% or more and 99.5 mass% or less, more preferably 1 mass% or more and 99 mass% or less, further preferably 1 mass% or more and 90 mass% or less, even more preferably 2 mass% or more and 80 mass% or less, even more preferably 5 mass% or more and 78 mass% or less, particularly preferably more than 10 mass% and not more than 75 mass%. If the mass ratio of the second phosphor to a total of 100 mass% of the first and second phosphors falls within the above range, the mixing of the colors of light can be controlled such that light with a ratio R/B of the photon flux R to the photon flux B of more than 4 and not more than 50 and a ratio R/Fr of the photon flux R to the photon flux Fr of 0.1 or greater and 10 or less is emitted because of the combination of light emitted from the light-emitting element with a peak emission wavelength in the wavelength range of 380 nm or greater and 490 nm or less and light emitted from the first phosphor and the second phosphor excited by the light emitted from the light-emitting element. If the mass ratio of the second phosphor to a total of 100 mass% of the first and second phosphors falls within the range of 2 mass% or more and 80 mass% or less, the ratio R/B of the photon flux R to the photon flux B can be more than 10 and not more than 38, and the ratio R/Fr of the photon flux R to the photon flux Fr can be 1.5 or greater and 4.12 or less, so that a light-emitting device that emits light that is easier for photoreceptors of plants to absorb and facilitates promotion of photomorphogenesis can be provided. If the mass ratio of the second phosphor to a total of 100 mass% of the first and second phosphors falls within the range of more than 10 mass% and not more than 75 mass%, the ratio R/B of the photon flux R to the photon flux B can be more than 10 and not more than 38, and the ratio R/Fr of the photon flux R to the photon flux Fr can be 1.5 or greater and 4.0 or less, so that a light-emitting device that emits light that is even easier for photoreceptors of plants to absorb and further facilitates promotion of photomorphogenesis can be provided.

### <Regarding Third Light-emitting Device 142>

Next, description of the third light-emitting device 142 above is supplemented. The red phosphor preferably includes a phosphor (hereinafter may be referred to as a "CASN phosphor") containing Eu²⁺-activated silicon nitride and having a composition containing Al and at least one element selected from Sr and Ca. The red phosphor preferably includes at least one phosphor selected from the group consisting of a phosphor containing Eu²⁺-activated aluminum nitride and having a composition containing at least one element selected from the group consisting of the alkaline earth metal elements and at least one element selected from the group consisting of alkali metal elements, a Mn⁴⁺-activated fluorogermanate phosphor, a Eu²⁺-activated phosphor containing a sulfide of Ca or Sr, and a phosphor containing a Mn⁴⁺-activated fluoride and having a composition containing at least one element or ion selected from the group consisting of the alkali metal elements and the ammonium ion (NH₄⁺) and at least one element selected from the group consisting of the group IV elements and the group XIV elements.

Specific examples of the red phosphor include a phosphor having any of the compositions represented by Formulas (IX) and (X) below and Formulas (II) and (IV) to (VI) above. Among these Formulas, the red phosphor preferably includes a phosphor containing silicon nitride having the composition represented by Formula (IX) below. The phosphor having any of the compositions represented by Formulas (IX) and (X) below and Formulas (II) and (IV) to (VI) above emits red light because of excitation light from the light-emitting element and has a comparatively broad emission peak, which has a half-width of 40 nm or greater, in the range of 580 nm or greater and 680 nm or less in the emission spectrum of the light-emitting device. As the emission peak of a red phosphor 70 in the range of 580 nm or greater and 680 nm or less is comparatively broad as represented by a half-width of 40 nm or greater, photoreceptors of more types of plants can absorb supplemented red light as light energy or sense supplemented red light as optical signals. Therefore, red light that can stably promote growth of plants or fortify plants with functional nutrients can be supplied.

(Ca₁₋ₛ₋ₜSrₛEuₜ)ₓAlᵤSiᵥN_{w} (IX)

In Formula (IX), s, t, u, v, w, and x are numbers respectively satisfying 0 ≤ s ≤ 1, 0 < t < 1.0, 0 < s + t ≤ 1.0, 0.8 ≤ x ≤ 1.0, 0.8 ≤ u ≤ 1.2, 0.8 ≤ v ≤ 1.2, 1.9 ≤ u + v ≤ 2.1, and 2.5 ≤ w ≤ 3.5.

A phosphor including the composition represented by Formula (IX) may be referred to as a CaAlSiN₃:Eu phosphor or a (Sr,Ca)AlSiN₃:Eu phosphor. In Formula (IX) above, the variable t is the molar ratio of the activating element Eu in the composition represented by Formula (IX) above. The variable t preferably satisfies 0.0001 ≤ t ≤ 0.2, more preferably 0.0001 ≤ t ≤ 0.1, further preferably 0.0002 ≤ t ≤ 0.05. In Formula (IX) above, the variable s is the molar ratio of Sr in the composition represented by Formula (IX) above. The variable s preferably satisfies 0 ≤ s ≤ 0.98, more preferably 0 ≤ s ≤ 0.95, further preferably 0 ≤ s ≤ 0.9.

(CaₐSr_{1-a-c-d}Ba_{d}Eu_{c})_{f}Li_{b}Al₃Nₑ (X)

In Formula (X), a, b, c, d, e, and f are numbers respectively satisfying 0 ≤ a < 1.0, 0.8 ≤ b ≤ 1.05, 0.001 < c ≤ 0.1, 0 ≤ d ≤ 0.2, 3.0 ≤ e ≤ 5.0, and 0.8 ≤ f ≤ 1.05.

The third light-emitting device 142 may include another type of phosphor that emits light in a wavelength region other than the red wavelength region in addition to the red phosphor as long as the ratio R/B of the photon flux R of red light in the range of 620 nm or greater and 700 nm or less to the photon flux B of blue light in the range of 400 nm or greater and 490 nm or less falls within the range of more than 20 and not more than 200. Examples of the other type of phosphor include a green phosphor that emits green light, a yellow phosphor that emits yellow light, and a far-red phosphor having a peak emission wavelength in the range of more than 680 nm, on absorption of a portion of light emitted from the light-emitting element.

Specific examples of the green phosphor include a phosphor having any of the compositions represented by Formulas (i) to (iii) below.

M¹¹₈MgSi₄O₁₆X¹¹2:Eu (i)

In Formula (i), M¹¹ is at least one selected from the group consisting of Ca, Sr, Ba, and Zn, and X11 is at least one selected from the group consisting of F, Cl, Br, and I.

Si_{6-b}Al_{b}O_{b}N_{8-b}:Eu (ii)

In Formula (ii), b satisfies 0 < b < 4.2.

M¹³Ga₂S₄:Eu (iii)

In Formula (iii), M¹³ is at least one selected from the group consisting of Mg, Ca, Sr, and Ba. Examples of the green phosphor also include silicate phosphors such as (Ca,Sr,Ba)₂SiO₄:Eu and Ca₃Sc₂Si₃O₁₂:Ce.

Specific examples of the yellow phosphor include a phosphor having any of the compositions represented by Formulas (iv) and (v) below.

M¹⁴_{c/e}Si_{12-(c+d)}Al_{c+d}O_{d}N_{16-d}:Eu (iv)

In Formula (iv), M¹⁴ is at least one selected from the group consisting of Sr, Ca, Li, and Y, c is 0.5 to 5, d is 0 to 2.5, and e is the electric charge of M¹⁴.

M¹⁵₃(Al,Ga)₅O₁₂:Ce (v)

In Formula (v), M¹⁵ is Y or at least one selected from the group consisting of Lu, Gd, and Tb.

Specific examples of the far-red phosphor having a peak emission wavelength in the range of more than 680 nm include a phosphor having any of the compositions represented by Formulas (vi) to (xi) below.

(Al_{1-f}Cr_{f})₂O₃ (vi)

In Formula (vi), f is a number satisfying 0 < f < 1.

(Ln_{1-x-y}CeₓCr_{y})₃(Al_{1-z}M¹⁶_{z})₅O₁₂ (vii)

In Formula (vii), Ln is at least one rare earth element selected from the group consisting of rare earth elements other than Ce, M¹⁶ is at least one element selected from the group consisting of Ga and In, and x, y, and z are numbers satisfying 0.0002 < x < 0.50, 0.0001 < y < 0.05, and 0 ≤ z ≤ 0.8.

CaYAl0₄:Mn (viii)

LiAlO₂:Fe (ix)

CdS:Ag (x)

GdAlO₃:Cr (xi)

The present invention has been described above, but the present invention is not limited to the embodiments that have been specifically disclosed. Various variations and modifications can be made within the scope of the claims.

### Industrial Applicability

The device or system described in each embodiment can be used for growing plants or the like.

### Reference Signs List

- 1: growing system

- 10, 11, 12, and 13: lighting device
- 110: white light source
- 130: white light-emitting device
- 111: auxiliary light source
- 140: first light-emitting device
- 141: second light-emitting device
- 142: third light-emitting device
- 112: rising/setting detector
- 113: light amount measuring unit
- 114: illumination control switch
- 115: white control switch
- 116: power supply unit
- 117: CPU
- 118: ROM
- 119: RAM
- 120: HDD
- 121: communication I/F
- 250 and 350: rising/setting judgment unit
- 251 and 351: illuminance judgment unit
- 252 and 352: illumination controller
- 253 and 353: timer
- 254 and 354: mode setting unit
- 355: illuminance corrector
- 356: correction data storing unit
- 20: greenhouse
- 30: control device
- 40: environment measuring device

## Claims

1. A lighting device comprising:
a white light source;
an auxiliary light source configured to emit red light and far-red light; and
an illumination controller configured to control a degree of emission of light by the white light source or the auxiliary light source,
wherein the illumination controller is configured to start or stop controlling emission of light by the white light source or the auxiliary light sources according to sunrise or sunset.

2. A lighting device comprising:
a white light source;
an auxiliary light source configured to emit red light and far-red light; and
an illumination controller configured to control a degree of emission of light by the white light source or the auxiliary light source,
wherein the illumination controller is configured to control emission of light by the white light source or the auxiliary light source corresponding to a weather classification specified from among a plurality of weather classifications.

3. The lighting device according to claim 1 or 2, wherein the illumination controller performs control to maintain a degree of emission of red light and far-red light from the auxiliary light source and to reduce or increase a degree of emission of light from the white light source according to an irradiance of natural light.

4. The lighting device according to any one of claims 1 to 3, wherein the illumination controller controls a start and an end of supplementation of light according to rising or setting of the sun if a setting of controlling the supplementation of light according to rising or setting of the sun is selected and controls the start or the end of the supplementation of light based on sunrise or sunset if a setting of controlling the supplementation of light for a preset predetermined period of time is selected.

5. The lighting device according to any one of claims 1 to 4, further comprising:
a rising/setting detector configured to acquire a rising/setting parameter for recognizing rising or setting of the sun; and
a rising/setting judgment unit configured to determine a state of rising or setting based on the acquired rising/setting parameter.

6. The lighting device according to any one of claims 1 to 5, further comprising:
a light amount measuring unit configured to acquire a light amount parameter indicating an amount of light applied by natural light; and
an illuminance judgment unit configured to judge whether application of light by the white light source is to be reduced based on the acquired light amount parameter.

7. The lighting device according to claim 6, further comprising:
a correction data storing unit configured to store a correction data for an amount of light based on irradiation by the sun; and
an illuminance corrector configured to correct the light amount parameter acquired by the light amount measuring unit based on the correction data,
wherein the illuminance judgment unit judges whether application of light by the white light source is to be reduced based on the light amount parameter corrected by the illuminance corrector.

8. The lighting device according to claim 7,
wherein the correction data storing unit stores the correction data comprising correction parameters determined for a plurality of time zones and a plurality of weather classifications, and
wherein the illuminance corrector corrects the light amount parameter acquired by the light amount measuring unit based on a correction parameter corresponding to a determined time zone and weather classification.

9. The lighting device according to any one of claims 1 to 8,
wherein the auxiliary light sources comprise a plurality of light-emitting devices,
wherein the plurality of light-emitting devices comprise:
at least one of a first light-emitting device and a second light-emitting device; and
a third light-emitting device,
wherein the first light-emitting device has:
a ratio R/B of a photon flux R of red light in a wavelength range of 620 nm or greater and less than 700 nm to a photon flux B of blue light in a wavelength range of 400 nm or greater and 490 nm or less of more than 4 and not more than 50; and
a ratio R/Fr of the photon flux R to a photon flux Fr of far-red light in a wavelength range of 700 nm or greater and 780 nm or less of 0.1 or greater and 10 or less,
wherein the second light-emitting device has:
a ratio R/B of a photon flux R in a range of 620 nm or greater and less than 700 nm to a photon flux B in a range of 380 nm or greater and 490 nm or less of 2.0 or greater and 4.0 or less; and
a ratio R/FR of a photon flux R in a range of 620 nm or greater and less than 700 nm to a photon flux FR in a range of 700 nm or greater and 780 nm or less of 0.7 or greater and 13.0 or less, and
wherein the third light-emitting device has a ratio R/B of a photon flux R of red light in a range of 620 nm or greater and 700 nm or less to a photon flux B of blue light in a range of 400 nm or greater and 490 nm or less of more than 20 and not more than 200.

10. A growing system using natural light and light emitted from a plurality of lighting devices, the growing system having a greenhouse and a plurality of lighting devices disposed in the greenhouse, the growing system comprising:
a plurality of white light sources;
a plurality of auxiliary light sources each of which is configured to emit red light and far-red light; and
an illumination controller configured to control a degree of emission of light from the white light sources or the auxiliary light sources of the plurality of lighting devices,
wherein the illumination controller is configured to start or stop controlling emission of light from the white light sources or the auxiliary light sources according to sunrise or sunset.

11. A growing system using natural light and light emitted from a plurality of lighting devices, the growing system having a greenhouse and a plurality of lighting devices disposed in the greenhouse, the growing system comprising:
a plurality of white light sources;
a plurality of auxiliary light sources each of which is configured to emit red light and far-red light; and
an illumination controller configured to control a degree of emission of light from the white light sources or the auxiliary light sources of the plurality of lighting devices,
wherein the illumination controller is configured to control emission of light from the white light sources or the auxiliary light sources according to a weather classification specified from among a plurality of weather classifications.
